# EUROPEAN PATENT APPLICATION

(11) **EP 4 712 581 A1**
(43) Date of publication of application: **18.03.2026**
(21) Application number: 23936181.9
(22) Date of filing: 11.05.2023
(51) Int. Cl.: H04W 52/02

(54) **INFORMATION TRANSMISSION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN); LI, Yanhua, Beijing 100085 (CN)
(74) Representative: Stöckeler, Ferdinand
(86) International application number: PCT/CN2023/093719
(87) International publication number: WO 2024/229868

(57) **Abstract**

Provided in the embodiments of the present disclosure are an information transmission method and apparatus, a communication device, and a storage medium. A method executed by a first core network element comprises: sending first information to a radio access network (RAN), wherein the first information is information provided by an application function (AF), and the first information is configured to indicate a time interval between end time of a first data burst and start time of a second data burst in two adjacent data bursts.

## Description

### TECHNICAL FIELD

The present disclosure relates to, but is not limited to, the field of wireless communication technology, and specifically to a method and an apparatus for information transmission, a communication device, and a storage medium.

### BACKGROUND

An extended reality (XR) service involves a multimodal data stream. Multimodal data is data that describes an input from the same device or different devices (including sensors) for the same service and/or application input, and the data may be output to one or more destination terminals. Each data stream in the multimodal data often has a certain or even strong correlation, such as synchronization of audio and video streams, haptic-visual synchronization, etc. There are some common characteristics in data streams themselves for such type of media services, among the data streams, and in network transmission requirements of these service data streams. Effective identification and utilization of these characteristics will be more conducive to transmission and control of a network and a service, and will also be more conducive to service assurance and user experience.

### SUMMARY

Embodiments of the present disclosure provide a method and an apparatus for information transmission, a communication device, and a storage medium.

According to a first aspect of the embodiments of the present disclosure, a method for information transmission is provided, performed by a first core network element. The method includes: sending first information to a radio access network (RAN), in which the first information is information provided by an application function (AF); and the first information indicates a gap between an end time of a first data burst and a start time of a second data burst in two adjacent data bursts.

According to a second aspect of the embodiments of the present disclosure, a method for information transmission is provided, performed by an AF. The method includes: sending first information provided by the AF, in which the first information indicates a gap between an end time of a first data burst and a start time of a second data burst in two adjacent data bursts.

According to a third aspect of the embodiments of the present disclosure, a method for information transmission is provided, performed by an RAN. The method includes: receiving first information provided by an AF, in which the first information indicates a gap between an end time of a first data burst and a start time of a second data burst in two adjacent data bursts.

According to a fourth aspect of the embodiments of the present disclosure, an apparatus for information transmission is provided, applied to a first core network element. The apparatus includes: a sending module, configured to send first information to an RAN, in which the first information is information provided by an AF; and the first information indicates a gap between an end time of a first data burst and a start time of a second data burst in two adjacent data bursts.

According to a fifth aspect of the embodiments of the present disclosure, an apparatus for information transmission is provided, applied to an AF. The apparatus includes: a sending module, configured to send first information provided by the AF, in which the first information indicates a gap between an end time of a first data burst and a start time of a second data burst in two adjacent data bursts.

According to a sixth aspect of the embodiments of the present disclosure, an apparatus for information transmission is provided, applied to an RAN. The apparatus includes: a receiving module, configured to receive first information provided by an AF, in which the first information indicates a gap between an end time of a first data burst and a start time of a second data burst in two adjacent data bursts.

According to a seventh aspect of the embodiments of the present disclosure, a communication device is provided, including: a processor; a memory for storing instructions executable by the processor, in which when the instructions are executed by the processor, the processor is configured to implement the method for information transmission provided in the first aspect or the second aspect or the third aspect.

According to an eighth aspect of the embodiments of the present disclosure, a communication system is provided, including: a first core network element, an AF, and an RAN, in which the first core network element is configured to perform the method for information transmission as described in the first aspect; and the AF is configured to perform the method for information transmission as described in the second aspect; the RAN is configured to perform the method for information transmission as described in the third aspect.

According to a ninth aspect of the embodiments of the present disclosure, a computer storage medium for storing a computer executable program is provided. When the computer executable program is executed by a processor, the method for information transmission provided in the first aspect or the second aspect or the third aspect is implemented.

In the method and the apparatus for information transmission, the communication device, and the storage medium provided by the embodiments of the present disclosure, the first core network element sends the first information provided by the AF to the RAN, and the RAN may accurately determine, based on the first information, the gap between the end time of the first data burst and the start time of the second data burst in the two adjacent data bursts, thus enabling the RAN to achieve energy consumption balance and system energy saving by using an idle time between the two adjacent data bursts.

In some embodiments, the term "method for information transmission" may be interchanged with terms such as "communication method", "method for processing information", etc., the term "apparatus for information transmission" may be interchanged with terms such as "communication apparatus", "apparatus for processing information", etc., and the term "communication system" may be interchanged with terms such as "system for information transmission", etc.

It should be understood that an above general description and a following detailed description are exemplary and explanatory only, and do not limit the embodiments of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the embodiments of the present disclosure.
FIG. 1 is a schematic diagram of a structure of a wireless communication system according to an exemplary embodiment.
FIG. 2 is a flowchart of a method for information transmission according to an exemplary embodiment.
FIG. 3 is a flowchart of a method for information transmission according to an exemplary embodiment.
FIG. 4 is a flowchart of a method for information transmission according to an exemplary embodiment.
FIG. 5 is a flowchart of a method for information transmission according to an exemplary embodiment.
FIG. 6 is a flowchart of a method for information transmission according to an exemplary embodiment.
FIG. 7a is a flowchart of a method for information transmission according to an exemplary embodiment.
FIG. 7b is a flowchart of a method for information transmission according to an exemplary embodiment.
FIG. 8a is a block diagram of an apparatus for information transmission according to an exemplary embodiment.
FIG. 8b is a block diagram of an apparatus for information transmission according to an exemplary embodiment.
FIG. 8c is a block diagram of an apparatus for information transmission according to an exemplary embodiment.
FIG. 9 is a block diagram of a communication device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments of the present disclosure. Instead, they are merely examples of apparatuses and methods consistent with aspects in the embodiments of the present disclosure.

The terms used in embodiments of the present disclosure are solely for the purpose of describing a particular embodiment and are not intended to limit the embodiments of the present disclosure. The terms "a/an" and "the" in a singular form used in embodiments and claims of the present disclosure are also intended to include a plural form, unless the context clearly indicates other meaning. It may also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without departing from the scope of the embodiments of the present disclosure, the first information may also be referred to as the second information, and similarly, the second information may be referred to as the first information. Depending on the context, the word "if" used here may be interpreted as "when", "while", or "in response to determining... ".

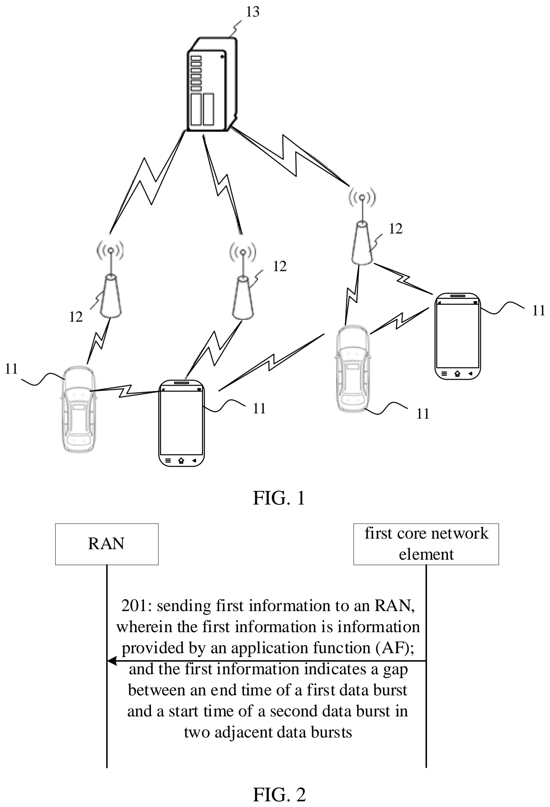

Please refer to FIG. 1, FIG. 1 is a schematic diagram of a structure of a wireless communication system according to an exemplary embodiment. As shown in FIG. 1, the wireless communication system is a communication system based on cellular mobile communication technology, and the wireless communication system may include: a plurality of user equipment (UE) 11 and a plurality of access network devices 12.

The UE 11 may be a device that provides voice and/or data connectivity to a user. The UE 11 may communicate with one or more core networks via a radio access network (RAN). The UE 11 may be an Internet of Things (IoT) UE, such as a sensor device, a mobile phone (also known as "cellular" phone), and a computer with the IoT UE. For example, the UE 11 may be a fixed, portable, pocket, handheld, computer built-in or vehicle-mounted device, for example, a station (STA), a subscriber unit, a subscriber station, a mobile station, a mobile, a remote station, an access point, a remote terminal, an access terminal, a user terminal, a user agent, a user device, or a user equipment. Or, the UE 11 may also be a wearable device, a virtual reality (VR) device, an augmented reality (AR) device, or a VR/AR hybrid head-mounted device. Or, the UE 11 may also be a device for an unmanned aerial vehicle (UAV). Or, the UE 11 may also be a vehicle-mounted device, for example, a vehicle computer with a wireless communication function, or a wireless UE externally coupled to the vehicle computer. Or, the UE 11 may be a roadside device, such as a street lamp, a signal lamp or other roadside devices with a wireless communication function.

The access network device 12 may be a device in the wireless communication system for communicating with the UE 11, and may be a base station, or an access point, or a network device, or a device in an access network that communicates with a wireless terminal on a radio interface via one or more sectors. The network device may be configured to convert a received radio frame and an Internet protocol (IP) packet mutually, and act as a router between the wireless terminal and rest of the access network, in which the rest of the access network may include an IP network. The network device may also coordinate attribute management of the radio interface. The wireless communication system may be a 4th generation mobile communication (4G) system, also known as a long term evolution (LTE) system; or the wireless communication system may also be a 5th generation mobile communication (5G) system, also known as a new radio (NR) system or a 5G NR system; or the wireless communication system may also be a next-generation system of the 5G system. The access network in the 5G system may be referred to as new generation-radio access network (NG-RAN).

The access network device 12 may be an evolved Node B (eNB) in the 4G system, or a next generation node B (gNB) that adopts a centralized distributed architecture in the 5G system. When the access network device 12 adopts the centralized distributed architecture, the access network device 12 usually includes a central unit (CU) and at least two distributed units (DUs). The CU is provided with protocol stacks of a packet data convergence protocol (PDCP) layer, a radio link control (RLC) layer, and a media access control (MAC) layer. The DU is provided with a protocol stack of a physical (PHY) layer. The embodiments of the present disclosure do not limit the specific implementation of the access network device 12.

A wireless connection may be set up between the access network device 12 and the UE 11 via a radio interface. In different implementations, the radio interface may be a radio interface based on a 4G standard; or the radio interface may be a radio interface based on a 5G standard, for example, the radio interface may be a new radio interface; or the radio interface may also be a radio interface based on a next generation of a mobile communication network technology standard for the 5G.

In some embodiments, an end to end (E2E) connection or a device to device (D2D) connection may also be established between UEs 11 in scenarios, for example, a vehicle to vehicle (V2V) communication, a vehicle to infrastructure (V2I) communication, a vehicle to pedestrian (V2P) communication in a vehicle to everything (V2X) communication.

In some embodiments, the wireless communication system may also include a core network device 13. The plurality of access network devices 12 are respectively connected to the core network device 13.

In some embodiments, the core network device 13 may be a mobility management entity (MME) in an evolved packet core (EPC). Or, the core network device may be other core network devices, such as a serving GateWay (SGW), a public data network GateWay (PGW), and a policy and charging rules function (PCRF), or a home subscriber server (HSS).

In some embodiments, the core network device 13 may include one or more network elements, for example, an access and mobility management function (AMF) entity, a session management function (SMF) entity, a user plane function (UPF) entity, a policy control function (PCF) entity, a network exposure function (NEF) entity, etc.

The main functions of the above core network elements are as follows. SMF is responsible for session management, including establishment, modification, release, etc. of a packet data unit (PDU) session; PCF is responsible for user policy management, including both mobility-related policies and PDU session-related policies, such as a quality of service (QoS) policy, a charging policy, etc.; and UPF is responsible for forwarding user data.

In the embodiments of the present disclosure, the PCF, the SMF, the UPF, etc. each may be implemented by one entity device, or may be implemented jointly by a plurality of entity devices. It may be understood that, in the embodiments of the present disclosure, PCF, the SMF, the UPF, etc. each may be a logical functional module within an entity device, or may be a logical functional module composed of a plurality of entity devices, which is not limited in the embodiments of the present disclosure.

In order to facilitate the understanding of those skilled in the art, a plurality of implementations are listed in the embodiments of the present disclosure to clearly illustrate the technical solution of the embodiments of the present disclosure. Of course, those skilled in the art may understand that the plurality of implementations in the embodiments of the present disclosure may be executed individually or in combination with the method of other embodiments in the present disclosure, or individually or in combination with some methods in other related arts, which is not limited in the embodiments of the present disclosure.

In each embodiment of the present disclosure, if there is no special indication or there are no logical conflicts, the terms and/or descriptions between the embodiments are consistent and may be referenced mutually, and the technical features in different embodiments may be combined according to their inherent logical relationships to form new embodiments.

The terms used in the embodiments of the present disclosure are only for a purpose of describing a specific embodiment and are not intended to limit the present disclosure.

An extended reality media (XRM) service and an interaction media service require a communication system (such as 5G system) to comprehensively consider a QoS characteristic of a relevant data stream of a service, for example, whether a delay critical guaranteed bit rate (GBR), a guaranteed flow bit rate (GFBR), a packet delay budget (PDB), a maximum data burst volume (MDBV), etc. may be simultaneously satisfied and coordinated consistently. It is involved to ensure the consistency in QoS authorization and execution for a plurality of XRM data streams of one UE and a plurality of XRM data streams of a plurality of UEs.

In the embodiments of the present disclosure, a 5G communication system supports function enhancement of processing by an application function (AF) a PDU set in an XRM service data flow (SDF), to support enhancement of QoS awareness and guarantee for the XRM service data flow by the AF, and enhancement of user quality of experience (QoE), including: the AF providing PDU set specific QoS characteristics and protocol description.

For example, the PDU set specific QoS characteristics include at least one of: a PDU set delay budget (PSDB), a PDU set error rate (PSER), or PDU set integrated handling information (PSIHI).

For example, the SMF and the UPF may, in combination with the protocol description provided by the AF and a protocol extension header, execute a GPRS tunnelling protocol for the user plane (GTP-U) extension header of corresponding PDU(s) in a PDU set of a corresponding SDF, and carry PDU set information. The PDU set information is used by the NG-RAN for PDU set based QoS handling.

The PDU set information may include at least one of: a PDU set sequence number; an indication of end PDU of the PDU set; a PDU sequence number within a PDU set; a PDU set size in bytes; or a PDU set importance, which identifies the relative importance of a PDU set compared to other PDU sets within a QoS Flow.

For an SDF, for example, an SDF of the XRM service and an SDF of the interaction media service, it is required to achieve energy consumption balance and system energy saving for SDF characteristics combining with PDU sets.

The embodiments of the present disclosure provide a method for information transmission, which may provide the gap between the end time of the first data burst and the start time of the second data burst in the two adjacent data bursts provided by the AF to the core network element and/or the access network device, so as to achieve energy consumption balance and system energy saving.

The PCF involved in the embodiments of the present disclosure and the following AF, UPF, SMF, and NEF, etc. each may be a logical node or function that may be flexibly deployed in a communication network. For example, the UPF, the SMF, the NEF, and the PCF, etc. each may be a logical node or function that may be flexibly deployed in a core network.

In some embodiments, the AF, the PCF, the UPF, the SMF, and the NEF may all be operator network elements. In other embodiments, the PCF, the UPF, the SMF, and the NEF are operator network elements, and the AF is a third-party network element.

FIG. 2 is a flowchart of a method for information transmission according to an exemplary embodiment. As shown in FIG. 2, the method is performed by a first core network element and includes the following step at 201.

At 201, first information is sent to an RAN, in which the first information is information provided by an AF; and the first information indicates a gap between an end time of a first data burst and a start time of a second data burst in two adjacent data bursts.

In some examples, the first core network element may be a PCF, or may also be other network element. For example, the PCF sends the first information provided by the AF to the RAN.

In some embodiments, the RAN may include a radio access network device that provides access to a network for a UE. The radio access network device may be an NG-RAN device, for example, a gNB.

In some examples, a data burst may be a set of a plurality of PDUs generated and sent by an application within a short time.

In some examples, a data burst may include one or more PDU sets. A PDU set includes a plurality of PDUs.

A data burst has a start of the data burst and an end of the data burst. A start time of the data burst is a time when the data burst starts, and an end time of the data burst is a time when the data burst ends.

In some examples, the two adjacent data bursts are included in a plurality of data bursts of a downlink data flow, and the downlink data flow may be, for example, the SDF. The SDF may be a data flow of any service. For example, the SDF may include an XRM service data flow or an XR data flow, etc.

In some examples, the first information may include: the end time of the first data burst and the start time of the second data burst in the two adjacent data bursts.

In some examples, the first information may be an "idle time between two data bursts, inter burst gap, or idle period until the next burst". The inter burst gap indicates a time gap between an end time of a first data burst and a start time of a second data burst in two adjacent data bursts.

It needs to be noted that the inter burst gap is different from a burst interval time. The burst interval time indicates a time gap between a start time of the first data burst and the start time of the second data burst in two adjacent data bursts.

In some examples, the inter burst gap and the burst interval time may be carried in the same message. For example, the inter burst gap and the burst interval time may be carried in an AF request.

In some examples, the first information provided by the AF may be carried in the AF request, and the AF request may be an AF session resource request.

For example, the AF request may also carry XRM service information, used to identify the XRM service data flow or a data flow group. For example, the XRM service information includes at least one of: a multi-modal service ID, a UE address or a UE identifier, an AF identifier, an application ID, a flow description, a data network name (DNN), single network slice selection assistance information (S-NSSAI), a QoS parameter, or other information. The multi-modal service ID may be used to identify all flows in an XRM service group.

In the method for information transmission provided by the embodiments of the present disclosure, the first core network element sends the first information provided by the AF to the RAN, which enables the RAN to accurately determine, based on the first information, the gap between the end time of the first data burst and the start time of the second data burst in the two adjacent data bursts, thus enabling the RAN to achieve energy consumption balance and system energy saving by using an idle time between the two adjacent data bursts.

In some embodiments, the method may further include: receiving the first information provided by the AF.

In some examples, information transmission (including sending and/or receiving) between the first core network element and the AF may be directly or indirectly transmitted. For example, the information transmission between the first core network element and the AF may be indirectly transmitted via another network element, for example, it may be transparently transmitted via the NEF or another network element.

In some examples, the first core network element may receive the first information sent directly by the AF to the first core network element; or the first core network element may receive the first information sent by the AF to the first core network element via the NEF.

For example, if the AF is an untrusted AF, the first core network element may receive the first information sent by the AF via the NEF.

In some embodiments, the first information is sent from the AF to the first core network element during an AF session establishment procedure or an AF session update procedure.

In some embodiments, the first information is used by the first core network element to generate a policy and charging control (PCC) rule.

In some examples, when generating the PCC rule, the first core network element may refer to the first information provided by the AF.

In some examples, information transmission (including sending and/or receiving) between the first core network element and the RAN may be directly or indirectly transmitted. For example, the information transmission between the first core network element and the RAN may be indirectly transmitted via another network element, for example, it may be transparently transmitted via a third core network element or another network element.

In some embodiments, in the above step 201, sending the first information to the RAN may include: sending the first information to the RAN via a third core network element.

In some embodiments, the third core network element may be an SMF, or may also be another network element.

In some embodiments, sending the first information to the RAN via the third core network element includes: sending the first information to the third core network element by sending the PCC rule to the third core network element, in which the first information is sent by the third core network element to the RAN.

In some examples, the first core network element may send the PCC rule carrying the first information to the third core network element.

In some examples, the first core network element may enable that the PCC rule and the first information are included in a first message sent to the third core network element. For example, the first message may be an update request message, in which the update request message may be a session management (SM) policy association modification request message.

In some embodiments, the first information is carried in a first container sent by the third core network element to the RAN.

In some examples, the first container may be time sensitive communication assistance information (TSCAI). In other examples, the first container may also be a new parameter.

In some embodiments, the first core network element (for example, PCF) may send the first information to the SMF.

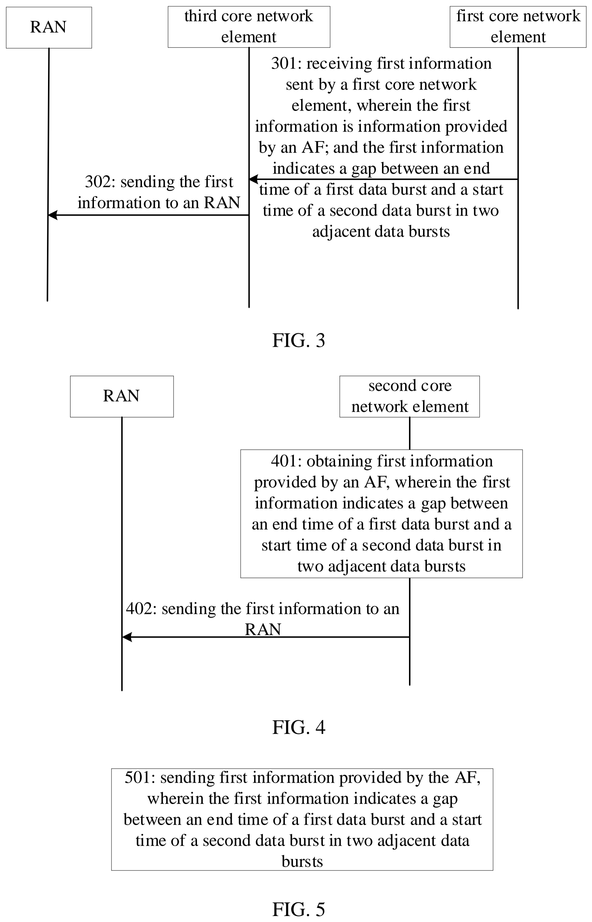

FIG. 3 is a flowchart of a method for information transmission according to an exemplary embodiment. As shown in FIG. 3, the method is performed by a third core network element and includes the following steps at 301 to 302.

At 301, first information sent by a first core network element is received, in which the first information is information provided by an AF; and the first information indicates a gap between an end time of a first data burst and a start time of a second data burst in two adjacent data bursts.

At 302, the first information is sent to an RAN.

In some examples, the third core network element may be an SMF, or may also be another network element.

In some examples, the first core network element may be a PCF, or may also be another network element.

In some examples, the two adjacent data bursts are included in a plurality of data bursts of a downlink SDF. For example, the SDF may include an XRM service data flow or an XR data flow, etc.

In some embodiments, in the above step 301, receiving the first information sent by the first core network element may include: receiving a PCC rule sent by the first core network element, in which the first information is carried in the PCC rule, or the first information and the PCC rule are included in the same message.

In some embodiments, in the above step 302, sending the first information to the RAN may include: sending a first container carrying the first information to the RAN.

In some examples, the first container may be TSCAI; or the first container may be a new parameter.

In some examples, information transmission (including sending and/or receiving) between the third core network element and the RAN may be directly or indirectly transmitted. For example, the information transmission between the third core network element and the RAN may be indirectly transmitted via another network element, for example, it may be transparently transmitted via an AMF or another network element.

In the method for information transmission provided by the embodiments of the present disclosure, the third core network element receives the first information provided by the AF and sent by the first core network element, and sends the first information to the RAN, which enables the RAN to accurately determine, based on the first information, the gap between the end time of the first data burst and the start time of the second data burst in the two adjacent data bursts, thus enabling the RAN to achieve energy consumption balance and system energy saving by using an idle time between the two adjacent data bursts.

It needs to be noted that, for a description of content that is repeated or corresponds to the above embodiments, for example, the first information in the embodiments of the present disclosure, reference may be made to the relevant content of the first information in 201 of FIG. 2, which will not be repeated here.

The present embodiment, in the absence of contradiction, may be arbitrarily combined with other embodiments; any solutions (or optional solutions) in the present embodiment may be combined with each other in the absence of contradiction; any solution in the present embodiment may be combined with any solution in other embodiments in the absence of contradiction; and the steps in the present embodiment may be exchanged in sequence in the absence of contradiction.

FIG. 4 is a flowchart of a method for information transmission according to an exemplary embodiment. As shown in FIG. 4, the method is performed by a second core network element and may include the following steps at 401 to 402.

At 401, first information provided by an AF is obtained, in which the first information indicates a gap between an end time of a first data burst and a start time of a second data burst in two adjacent data bursts.

At 402, the first information is sent to an RAN.

In some examples, the second core network element may be a UPF, or may also be another network element.

In some examples, in the above step 401, obtaining the first information provided by the AF may include: identifying and/or obtaining the first information from an extension header of a PDU according to a protocol description provided by the first core network element.

For example, the second core network element identifies and/or obtains the first information carried in the extension header of the PDU from an extension header of a downlink PDU according to the protocol description provided by the first core network element.

For example, the protocol description may be used to identify a PDU set. For example, the UPF may interpret a header extension based on the protocol description used to identify the PDU set, and according to the interpreted extension header of the PDU, identify and/or obtain the first information carried in the extension header of the PDU.

In some examples, the PDU is sent by an application server (AS) of the AF to the second core network element.

In some examples, the protocol description provided by the first core network element may be determined by the first core network element according to a protocol description provided by the AF and/or a protocol description in local operator policies.

For example, the protocol description provided by the AF to the first core network element may be carried in an AF request.

In some examples, a priority of the protocol description provided by the AF is higher than a priority of the protocol description in the local operator policies.

In some examples, the first core network element may be configured to, in a case that the protocol description provided by the AF is not received, determine a protocol description to be sent to the second core network element based on the protocol description in the local operator policies.

In some examples, the protocol description provided by the first core network element is sent by the first core network element to the second core network element via a third core network element, and the protocol description is carried in a PCC rule sent by the first core network element to the third core network element.

In some examples, the third core network element is an SMF.

For example, the first core network element is a PCF, and the PCC rule carrying the protocol description may be included in an update request sent by the PCF to the SMF, for example, the update request may be an SM policy association modification request.

In other examples, the second core network element may identify and/or obtain the first information carried in an extension header of a PDU from the extension header of the PDU based on a packet detection rule (PDR).

For example, the PDR includes a packet detection information (PDI) parameter, and the PDI parameter indicates a detailed rule of packet detection.

For example, the UPF may interpret the extension header of the PDU based on the PDR, and according to the interpreted extension header of the PDU, identify and/or obtain the first information carried in the extension header of the PDU.

In some embodiments, in the above step 402, sending the first information to the RAN may include: sending a GTP-U data packet to the RAN, in which a header of the GTP-U data packet carries the first information.

In this embodiment, the second core network element may obtain the first information from the extension header of the PDU, add the first information to the header of the GTP-U data packet, and send the GTP-U data packet to the RAN.

In some examples, the second core network element may enable that the first information as information related to a PDU set is carried in the header of the GTP-U data packet.

In the method for information transmission provided by the embodiments of the present disclosure, the second core network element obtains the first information provided by the AF and sends the first information to the RAN, which enables the RAN to accurately determine, based on the first information, the gap between the end time of the first data burst and the start time of the second data burst in the two adjacent data bursts, thus enabling the RAN to achieve energy consumption balance and system energy saving by using an idle time between the two adjacent data bursts.

It needs to be noted that, for a description of content that is repeated or corresponds to the above embodiments, for example, the first information in the embodiments of the present disclosure, reference may be made to the relevant content of the first information in 201 of FIG. 2, which will not be repeated here.

The present embodiment, in the absence of contradiction, may be arbitrarily combined with other embodiments; any solutions (or optional solutions) in the present embodiment may be combined with each other in the absence of contradiction; any solution in the present embodiment may be combined with any solution in other embodiments in the absence of contradiction; and the steps in the present embodiment may be exchanged in sequence in the absence of contradiction.

FIG. 5 is a flowchart of a method for information transmission according to an exemplary embodiment. As shown in FIG. 5, the method is performed by an AF and may include the following step at 501.

At 501, first information provided by the AF is sent, in which the first information indicates a gap between an end time of a first data burst and a start time of a second data burst in two adjacent data bursts.

In some embodiments, the AF may send the first information provided by the AF to an RAN.

In some embodiments, sending the first information provided by the AF may include at least one of: sending the first information to the RAN via a first core network element; or sending the first information to the RAN via a second core network element.

In some examples, the first core network element may be a PCF, or may also be another network element.

In some examples, the second core network element may be a UPF, or may also be another network element.

In some examples, information transmission (including sending and/or receiving) between the first core network element and the AF may be directly or indirectly transmitted. For example, the information transmission between the first core network element and the AF may be indirectly transmitted via another network element, for example, it may be transparently transmitted via an NEF or another network element.

In some examples, sending the first information to the RAN via the first core network element may include one of: sending the first information provided by the AF directly to the first core network element; or sending the first information provided by the AF to the first core network element via the NEF, in which the first information is sent by the first core network element to the RAN.

For example, if the AF is an untrusted AF, the AF sends the first information to the first core network element via the NEF.

In some examples, the first information provided by the AF may be carried in an AF request sent by the AF to the first core network element, and the AF request may be an AF session resource request.

For example, the AF request may also carry XRM service information, used to identify the XRM service data flow or a data flow group. For example, the XRM service information includes at least one of: a multi-modal service ID, a UE address or a UE identifier, an AF identifier, an application ID, a flow description, a DNN, S-NSSAI, a QoS parameter, or other information. The multi-modal service ID may be used to identify all flows in an XRM service group.

In some embodiments, the first information is sent from the AF to the first core network element in during an AF session establishment procedure or an AF session update procedure.

In some examples, sending the first information provided by the AF to the RAN via the second core network element may include: sending a GTP-U data packet to the RAN via the second core network element, in which a header of the GTP-U data packet carries the first information.

In this embodiment, the second core network element may obtain the first information from an extension header of a PDU, add the first information to the header of the GTP-U data packet, and send the GTP-U data packet to the RAN.

In some examples, the second core network element may enable that the first information as information related to a PDU set is carried in the header of the GTP-U data packet.

In some examples, the first information is identified and/or obtained by the second core network element from the extension header of the PDU according to a protocol description provided by the first core network element.

For example, the second core network element identifies and/or obtains the first information carried in the extension header of the PDU from an extension header of a downlink PDU according to the protocol description.

For example, the protocol description may be used to identify a PDU set. For example, the UPF may interpret a header extension based on the protocol description used to identify the PDU set, and according to the interpreted extension header of the PDU, identify and/or obtain the first information carried in the extension header of the PDU.

In other examples, the UPF may interpret the extension header of the PDU based on the PDR, and according to the interpreted extension header of the PDU, identify and/or obtain the first information carried in the extension header of the PDU. The PDR includes a packet detection information (PDI) parameter, and the PDI parameter indicates a detailed rule for packet detection.

In some examples, the PDU is sent by an AS of the AF to the second core network element.

In some examples, the protocol description provided by the first core network element is determined by the first core network element according to a protocol description provided by the AF and/or a protocol description in local operator policies.

For example, the protocol description provided by the AF to the first core network element may be carried in an AF request.

In some examples, a priority of the protocol description provided by the AF is higher than a priority of the protocol description in the local operator policies.

In some examples, the first core network element may be configured to, in a case that the protocol description provided by the AF is not received, determine a protocol description to be sent to the second core network element based on the protocol description in the local operator policies.

In some examples, the protocol description provided by the first core network element is sent by the first core network element to the second core network element via a third core network element, and the protocol description is carried in a PCC rule sent by the first core network element to the third core network element.

In some examples, the third core network element is an SMF.

For example, the first core network element is a PCF, and the PCC rule carrying the protocol description may be included in an update request sent by the PCF to the SMF, for example, the update request may be an SM policy association modification request.

In the method for information transmission provided by the embodiments of the present disclosure, the AF sends the first information provided by AF, which enables the RAN to accurately determine, based on the first information, the gap between the end time of the first data burst and the start time of the second data burst in the two adjacent data bursts when the RAN receives the first information, thus enabling the RAN to achieve energy consumption balance and system energy saving by using an idle time between the two adjacent data bursts.

It needs to be noted that, for a description of content that is repeated or corresponds to the above embodiments, for example, specific implementations of one or more steps involved in FIG. 5 in the embodiments of the present disclosure, reference may be made to relevant parts in the method embodiments shown in FIG. 2 to FIG. 4, which will not be repeated here.

The present embodiment, in the absence of contradiction, may be arbitrarily combined with other embodiments; any solutions (or optional solutions) in the present embodiment may be combined with each other in the absence of contradiction; any solution in the present embodiment may be combined with any solution in other embodiments in the absence of contradiction; and the steps in the present embodiment may be exchanged in sequence in the absence of contradiction.

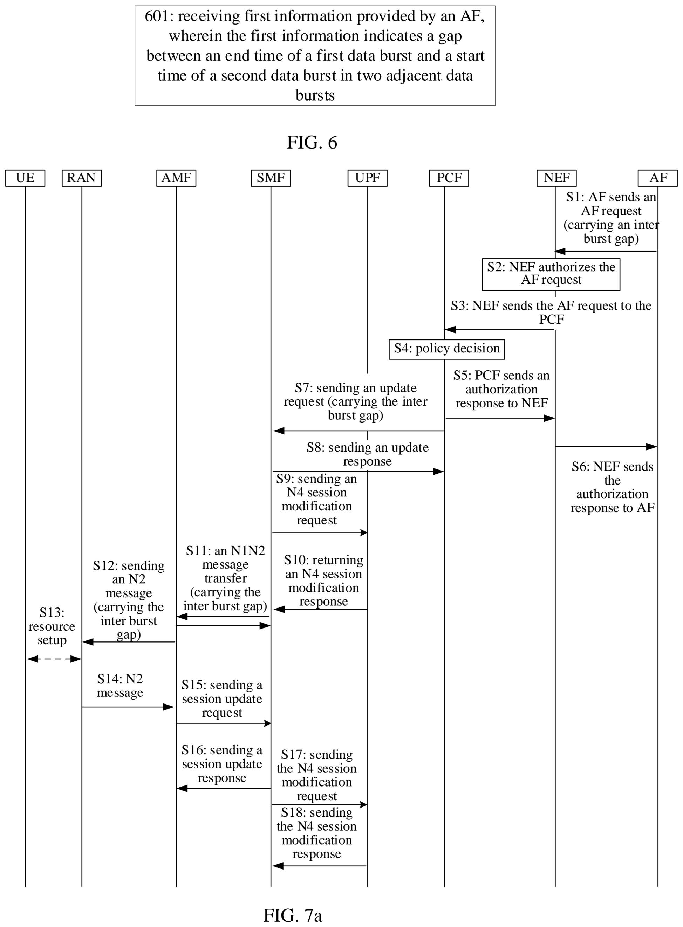

FIG. 6 is a flowchart of a method for information transmission according to an exemplary embodiment. As shown in FIG. 6, the method is performed by an RAN and may include the following step at 601.

At 601, first information provided by an AF is received, in which the first information indicates a gap between an end time of a first data burst and a start time of a second data burst in two adjacent data bursts.

In some examples, the two adjacent data bursts are included in a plurality of data bursts of a downlink SDF. For example, the SDF may include an XRM service data flow or an XR data flow, etc.

In some examples, the RAN may receive the first information provided by the AF via a core network element.

In some embodiments, in the above step 601, receiving the first information provided by the AF may include: receiving the first information provided by the AF and sent by a first core network element.

In some examples, the first core network element may be a PCF, or may also be another network element.

In some examples, information transmission (including sending and/or receiving) between the first core network element and the AF may be directly or indirectly transmitted. For example, the information transmission between the first core network element and the AF may be indirectly transmitted via another network element, for example, it may be transparently transmitted via an NEF or another network element.

In some examples, the first information may be sent directly by the AF to the first core network element, or the first information may be sent by the AF to the first core network element via the NEF.

For example, if the AF is an untrusted AF, the first information provided by the AF may be sent to the first core network element via the NEF.

In some examples, the first information provided by the AF may be carried in an AF request sent by the AF to the first core network element, and the AF request may be an AF session resource request.

In some embodiments, the first information is sent from the AF to the first core network element during an AF session establishment procedure or an AF session update procedure.

In some embodiments, the first information is used by the first core network element to generate a PCC rule.

In some embodiments, receiving the first information provided by the AF and sent by the first core network element may include: receiving the first information sent by the first core network element via a third core network element.

In some embodiments, the first information is sent by the first core network element to the third core network element by sending the PCC rule to the third core network element.

In some examples, the first core network element may send the PCC rule carrying the first information to the third core network element.

In some examples, the first core network element may enable that the PCC rule and the first information are included in a first message sent to the third core network element. For example, the first message may be an update request message, in which the update request message may be an SM policy association modification request message.

In some examples, the first information is carried in a first container sent by the third core network element to the RAN.

In some examples, the first container may be TSCAI, or the first container may also be a new parameter.

In some embodiments, in the above step 601, receiving the first information provided by the AF may include: receiving the first information provided by the AF and sent by a second core network element.

In some examples, the second core network element may be a UPF, or may also be another network element.

In some embodiments, receiving the first information provided by the AF and sent by the second core network element may include: receiving a GTP-U data packet sent by the second core network element, in which a header of the GTP-U data packet carries the first information.

In this embodiment, the second core network element may obtain the first information from an extension header of a PDU, add the first information to the header of the GTP-U data packet, and send the GTP-U data packet to the RAN.

In some embodiments, the first information may be identified and/or obtained by the second core network element from the extension header of the PDU according to a protocol description provided by a first core network element.

In some embodiments, the protocol description provided by the first core network element may be determined by the first core network element according to a protocol description provided by the AF and/or a protocol description in local operator policies.

In some examples, a priority of the protocol description provided by the AF is higher than a priority of the protocol description in the local operator policies.

In some examples, the first core network element may be configured to, in a case that the protocol description provided by the AF is not received, determine a protocol description to be sent to the second core network element based on the protocol description in the local operator policies.

In some examples, the protocol description provided by the first core network element may be sent by the first core network element to the second core network element via a third core network element, and the protocol description is carried in a PCC rule sent by the first core network element to the third core network element.

In other examples, the first information may be identified and/or obtained by the second core network element from the extension header of the PDU based on a PDR. The PDR includes a PDI parameter, and the PDI parameter indicates a detailed rule for packet detection.

For example, the first information may be identified and/or obtained according to the interpreted extension header of the PDU by interpreting the extension header of the PDU based on the PDR.

In some embodiments, the method may further include: performing UE power management configuration based on the first information.

For example, the UE power management configuration may include: a discontinuous reception (DRX) configuration, and the DRX configuration may include, for example, a connected mode DRX (CDRX) cycle.

When the UE is in a connected state, if there is no data transmission, the UE will stop monitoring a physical downlink control channel (PDCCH) according to a DRX rule, thus achieving the purpose of power saving.

Thus, the RAN may perform the UE power management configuration more accurately based on the first information, for example, predicting and adjusting a DRX cycle, thus further balancing energy consumption and QoE.

In the method for information transmission provided by the embodiments of the present disclosure, the AF sends the first information provided by the AF, which enables the RAN to accurately determine, based on the first information, the gap between the end time of the first data burst and the start time of the second data burst in the two adjacent data bursts when the RAN receives the first information, thus enabling the RAN to achieve energy consumption balance and system energy saving by using an idle time between the two adjacent data bursts.

It needs to be noted that, for a description of content that is repeated or corresponds to the above embodiments, for example, specific implementations of one or more steps involved in FIG. 6 in the embodiments of the present disclosure, reference may be made to relevant parts in the method embodiments shown in FIG. 2 to FIG. 5, which will not be repeated here.

The present embodiment, in the absence of contradiction, may be arbitrarily combined with other embodiments; any solutions (or optional solutions) in the present embodiment may be combined with each other in the absence of contradiction; any solution in the present embodiment may be combined with any solution in other embodiments in the absence of contradiction; and the steps in the present embodiment may be exchanged in sequence in the absence of contradiction.

To further explain any embodiment of the present disclosure, several specific embodiments are provided below.

In an embodiment, a method for information transmission is provided. The method may provide an inter burst gap (for example, the first information in the above embodiments) to the RAN based on a core network control plane (CP). The method may include: sending by an AF, an inter burst gap (idle time between two data bursts, or idle period until the next burst) to a 5G core network (5GC) (for example, an NEF or a PCF). The inter burst gap indicates a gap between an end time of a first data burst and a start time of a second data burst in two adjacent data bursts.

It needs to be noted that the inter burst gap is different from a burst interval time. The burst interval time indicates a gap between a start time of the first data burst and the start time of the second data burst in two adjacent data bursts.

In some examples, the inter burst gap and the burst interval time may be carried in the same message. For example, the inter burst gap and the burst interval time may be carried in an AF request.

In some examples, the AF may provide the inter burst gap to the NEF or the PCF during an AF QoS request procedure.

In some examples, the PCF determines a PCC rule considering the inter burst gap which is provided by the AF.

In some examples, the PCF sends the inter burst gap received from the AF/NEF to the SMF via the PCC rule.

In some examples, upon reception of the PCC rule, the SMF forwards the inter burst gap to an NG-RAN.

In some examples, the SMF determines a container (for example, TSCAI or a new parameter) including the inter burst gap, and forwards the container to the NG-RAN. For example, the container may be carried in a next generation application protocol (NGAP) message.

In some examples, the NG-RAN may configure UE power management according to the inter burst gap. For example, the inter burst gap may be used for DRX configuration.

In an embodiment, a method for information transmission is provided. The method may provide the inter burst gap to the RAN based on a core network UP, by a UPF for example. The method may include: providing by the UPF, the inter burst gap (idle time between two data bursts, or idle period until the next burst) to the RAN. The inter burst gap indicates a gap between an end time of a first data burst and a start time of a second data burst in two adjacent data bursts.

It needs to be noted that the inter burst gap is different from a burst interval time. The burst interval time indicates a gap between a start time of the first data burst and the start time of the second data burst in two adjacent data bursts.

In some examples, the inter burst gap and the burst interval time may be carried in the same message. For example, the inter burst gap and the burst interval time may be carried in an AF request.

In some examples, the PCF provides a protocol description within the PCC rule based on a protocol description provided by the AF and/or a protocol description provided by local operator policies.

In some examples, the SMF requests the UPF to identify and/or derive the inter burst gap, and marks the inter burst gap in a GTP-U extension header of the PDU(s) in a downlink (DL) PDU set, according to the PCC rule and/or the local operator policies.

In some examples, the UPF identifies the inter burst gap from the header extension of a DL PDU according to the protocol description, and provides the inter burst gap to the NG-RAN over a GTP-U of the PDU(s) in the DL PDU set.

As shown in FIG. 7a, the embodiments of the present disclosure provide a method for information transmission, and the method for information transmission may include the following steps at S1 to S18.

At S1, the AF sends an AF request carrying an inter burst gap .

For example, the AF request may be an AF session resource request; the AF creates the AF request via an Nnef_AFsessionWithQoS_Create request; and the AF may enable that the inter burst gap is carried in an AF request message.

The AF sends the inter burst gap (idle time between two data bursts, or idle period until the next burst) to a 5GC (NEF/PCF). The inter burst gap indicates a gap between an end time of a first data burst and a start time of a second data burst in two adjacent data bursts.

For example, the AF may provide the inter burst gap to the NEF or the PCF during an AF QoS request procedure.

Optionally, the AF request may also carry a burst interval time, and the burst interval time indicates a gap between a start time of the first data burst and the start time of the second data burst in the two adjacent data bursts.

Optionally, the AF request may also carry QoS requirements for an XRM service and an interaction media service data flow.

**In** some examples, the request message carries XRM service information, used to identify an XRM service data flow or a data flow group. For example, the XRM service information includes at least one of: a multi-modal service ID, a UE address or a UE identifier, an AF identifier, an application ID, a flow description, a DNN, S-NSSAI, a QoS parameter, or other information. The multi-modal service ID may be used to identify all flows in an XRM service group.

At S2, the NEF authorizes the AF request.

For example, if the AF is an untrusted AF, the AF request sent by the AF may be provided to the PCF via the NEF. Optionally, the NEF performs related mapping, including at least one of: mapping of an AF-Service-Identifier to the DNN and the S-NSSAI, mapping of an external application to a core network (CN) application identifier, and mapping of an external UE identifier to a UE identifier within a CN (for example, a subscription permanent identifier (SUPI)) based on unified data management (UDM) subscription information, or mapping of an XRM service group identifier externally to internally according to UDM subscription information.

At S3, the NEF sends the AF request to the PCF.

For example, the NEF authorizes the AF request and decides whether to invoke a time sensitive communication time synchronization function (TSCTSF) or to directly contact the PCF depending on parameters provided by the AF (these signaling steps are the same as signaling steps for setting up an AF session with a required QoS procedure).

The PCF receives attributes provided by the AF from the NEF or the TSCTSF. The NEF triggers an Npcf_PolicyAuthorization_Create request to send the AF request to the PCF, which carries QoS requirement information for the PCF to make a policy decision.

The AF message carries an inter burst gap (idle time between two data bursts, or idle period until the next burst) of a corresponding SDF. The inter burst gap indicates a gap between an end time of a first data burst and a start time of a second data burst in two adjacent data bursts.

It needs to be noted that the inter burst gap is different from a burst interval time. The burst interval time indicates a gap between a start time of the first data burst and the start time of the second data burst in two adjacent data bursts.

In some examples, the inter burst gap and the burst interval time may be carried in the same message. For example, the inter burst gap and the burst interval time may be carried in an AF request.

At S4, the PCF makes a policy decision.

For example, the PCF may determine updated or new policy information need to be sent to the SMF.

The PCF determines a PCC rule considering the inter burst gap which is provided by the AF. The PCF send the inter burst gap received from the AF/NEF to the SMF via the PCC rule.

At S5, the PCF sends an authorization response to the NEF.

For example, the authorization response may be an Npcf_PolicyAuthorization_Create response. The authorization response may be used to indicate whether the AF request is authorized.

At S6, the NEF sends the authorization response to the AF.

For example, the authorization response may be an Nnef_AFsessionWithQoS_Create response. The authorization response may be used to indicate whether the AF request is authorized.

At S7, the PCF sends an update request to the SMF.

For example, the update request may be an SM policy association modification request, and the update request includes the PCC rule. The PCC rule may include the inter burst gap.

For example, upon reception of the PCC rule, the SMF forwards the inter burst gap to the RAN. Further, the SMF determines a container (for example, TSCAI or a new parameter) including the inter burst gap, and forwards the container to the RAN (for example, in an NGAP message).

For example, the inter burst gap may be used by the RAN to configure UE power management (for example, for DRX configuration).

At S8, the SMF sends an update response to the PCF.

For example, the update response may be an SM policy association modification response.

At S9, the SMF initiates an N4 session modification request to the UPF.

For example, the N4 session modification request carries the inter burst gap.

At S10, the UPF returns an N4 session modification response to the SMF.

At S11, an N1N2 message is interacted between the AMF and the SMF.

For example, for a modification requested by the SMF, the SMF invokes Namf_Communication_N1N2MessageTransfer, and the Namf_Communication_N1N2 message includes at least one of: a PDU session ID, QFI(s), QoS Profile(s), a QoS monitoring configuration, or an N1 SM container.

At S12, the AMF sends an N2 message, an NAS message, and an N1 SM container to an RAN device.

For example, the N2 message is received by the AMF from the SMF, the NAS message includes an ID of a PDU session, and the N1 SM container includes a PDU session modification command. After receiving the QoS monitoring configuration, the RAN device enables measurement and reporting (for example, the RAN device measures a delay of an uplink SDF and a delay of a downlink SDF, and uses a sum of the delay of the uplink SDF and the delay of the downlink SDF as a round trip (RT) delay).

For example, upon reception of the inter burst gap, the RAN may configure UE power management (for example, for DRX configuration) according to the inter burst gap.

At S13, resource setup is performed between the RAN and the UE. S13 is optional.

At S14, the RAN sends a session acknowledgment message to the AMF.

For example, the session acknowledgment message is used to acknowledge a session modification request, and the session acknowledgment message may be an N2 PDU session ACK message.

At S15, the AMF sends a session update request to the SMF.

For example, the AMF forwards the session acknowledgment message (including an N2 SM message) received from the RAN to the SMF via an Nsmf_PDUSession_UpdateSMContext service operation.

At S16, the SMF sends a session update response to the AMF.

For example, the SMF responds to the session update request with the session update response (for example, Nsmf_PDUSession_UpdateSMContext Response).

At S17, the SMF sends the N4 session modification request to the UPF.

At S18, the UPF sends the N4 session modification response to the SMF.

In the embodiments of the present disclosure, some or all steps, and their optional implementations may be arbitrarily combined with some or all steps in other embodiments, and may also be arbitrarily combined with optional implementations of other embodiments.

For the above implementations, reference may be made to descriptions on a PCF side and/or UPF side and/or AF side and/or SMF side and/or RAN side, which are not repeated here.

In an embodiment, a method for information transmission is provided. The method may include that, in QoS processing based on the PDU set, the UPF provides the inter burst gap (idle time between two data bursts, or idle period until the next burst) to the NG-RAN. The inter burst gap indicates the gap between the end time of the first data burst and the start time of the second data burst in the two adjacent data bursts.

It needs to be noted that the inter burst gap is different from a burst interval time. The burst interval time indicates a gap between a start time of the first data burst and the start time of the second data burst in two adjacent data bursts.

In some examples, the inter burst gap and the burst interval time may be carried in the same message. For example, the inter burst gap and the burst interval time may be carried in an AF request.

During a PDU session establishment procedure or a PDU session modification procedure, the AF may provide a PDU set based on the QoS parameter and the protocol description.

The PCF may provide a protocol description within the PCC rule according to information provided by the AF and/or the local operator policies.

According to the PCC rule and/or the local operator policies, the SMF may request the UPF to identify and/or derive the inter burst gap, and mark the inter burst gap in the GTP-U header of the PDU(s) in the DL PDU set, according to the PCC rule and/or local operator policies.

The UPF identifies the inter burst gap from an extension header of a DL PDU according to the protocol description, and provides the inter burst gap to the NG-RAN over a GTP-U of the PDU(s) in the DL PDU set.

The embodiments of the present disclosure provide a method for information transmission, where an inter burst gap may be provided to the RAN based on an UP in the core network (for example, the first information in the above embodiments).

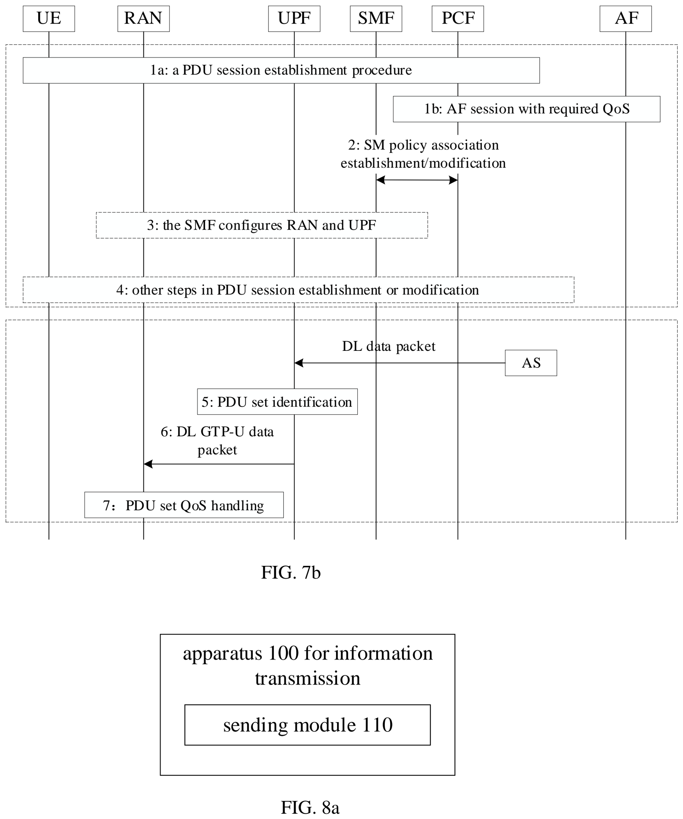

As shown in FIG. 7b, the method may include the following steps 1a to 7.

At 1a, steps 1 to 7a of a PDU session establishment procedure are performed, which may refer to steps 1 to 7a in an existing PDU session establishment procedure. Details are not repeated here.

At 1b, the AF may send information (QoS parameters for each PDU Set within a QoS flow, and parameters on frame identification) to the PCF via an Nnef_AFsessionWithQoS_Create request. The AF may also provide the information to a 5G system (5GS) prior to PDU session establishment. The information includes a protocol description and PDU set related assistance information. The PDU set related assistance information may include the QoS parameters for the each PDU set within the QoS Flow.

For example, the QoS parameters for the each PDU set in the QoS flow may include at least one of: a PDU set handling indication (indicating if PDU set based handling should be activated to a QoS flow). This indication may be implicitly indicated via other PDU set related information provided by the AF; whether all PDUs are needed for usage of PDU set by an application layer; a PDU set delay budget (PSDB); or a PDU set error rate (PSER).

At 2, The PCF generates appropriate PCC rules, which may include PDU set related QoS parameters. The PCF sends the PCC rules to the SMF.

The PDU set related QoS parameters may be new QoS parameters for PDU set based QoS handling in the 5GS.

The PDU set related QoS parameters may include at least one of: a PSDB; a PSER; whether all PDUs are required for the usage of PDU set by the application layer; or whether to drop a PDU set in case the PSDB is exceeded.

This step is done in step 7b in the PDU session establishment procedure, or step 1b in the PDU session modification procedure.

If this step is triggered by step 1b, the PCF generates the PCC rule considering the information provided by the AF.

At 3, The SMF generates QoS profiles and N4 rules based on the PCC rule from the PCF. The SMF sends the N4 rules to the UPF and sends the QoS profiles to an RAN node via the AMF.

The protocol description and the PDU set related assistance information are sent to the SMF as part of the PCC rule.

The SMF sends the protocol description and the PDU set related assistance information to the NG-RAN via the AMF as part of the QoS profile. Or the UPF may send the protocol description and the PDU set related assistance information to the RAN via a DL GTP-U header of a PDU.

This step is done via the steps at 8-15 in the PDU session establishment procedure, or the steps at 2-7 in the PDU session modification procedure.

At 4, other steps of the PDU session establishment or modification procedure are performed, which are similar to the steps of the session establishment or modification procedure in the related art. Details are not repeated here.

At 5, based on a received N4 rules or locally configuration on the UPF, the UPF identifies PDU set related information, and performs the PDU set based QoS handling according to the N4 rules. The UPF identifies PDUs belong to a PDU set and information for each PDU set. The information for each PDU set includes at least one of the following parameters: a PDU set sequence number (SN) (The QoS flow is identified using a QoS flow ID and each PDU set within the QoS flow is identified using a PDU set SN. Each QoS flow may be used to deliver one or more PDU sets.); a start/end PDU of the PDU set; a PDU SN within a PDU set; a number of PDUs within a PDU set; PDU set importance; a PDU set size; an end of a data burst; or an inter burst gap, indicating a gap between an end time of a first data burst and a start time of a second data burst in two adjacent data bursts.

Optionally, the information for each PDU set may further include a burst interval time, indicating a gap between a start time of the first data burst and the start time of the second data burst in two adjacent data bursts.

The UPF determines the PDU set related information via at least one of the following options:
Option 1: by matching a real-time transport protocol (RTP) header and payload, or a secure real-time transport protocol (SRTP) header and payload;
Option 2: a new RTP extension header;
Option 3: information provided by the AS in an N6 encapsulation header, for example, a GTP-U;
Option 4: by detection based on traffic characteristics;
Option 5: by non-standardized mechanisms for UPF implementation.

At 6, the UPF sends the PDU set related information to the RAN. The UPF provides the above PDU set related information (e.g., listed in the related information in step 5 of FIG. 7b) to the RAN. For the PDU set related information in step 5 (including the inter burst gap (inter burst time, or time to the next burst)), the UPF adds the information into a GTP-U header.

At 7, based on the PDU set related information received in step 6, the RAN performs the PDU set based QoS handling.

For example, upon reception of the inter burst gap, the RAN configure UE power management (e.g. for DRX configuration).

For the above implementations, reference may be made to descriptions on a PCF side and/or UPF side and/or AF side and/or SMF side and/or RAN side, which are not repeated here.

In the embodiments of the present disclosure, some or all steps, and their optional implementations may be arbitrarily combined with some or all steps in other embodiments, and may also be arbitrarily combined with optional implementations of other embodiments.

As shown in FIG. 8a, the embodiments of the present disclosure provide an apparatus for information transmission, applied to a first core network element. The apparatus 100 for information transmission may include: a sending module 110, configured to send first information to an RAN, in which the first information is information provided by an AF; and the first information indicates a gap between an end time of a first data burst and a start time of a second data burst in two adjacent data bursts.

In some embodiments, the apparatus 100 further includes: a receiving module, configured to receive the first information sent directly from the AF to the first core network element; or receive the first information sent from the AF to the first core network element via an NEF.

In some embodiments, the first information is sent from the AF to the first core network element during an AF session establishment procedure or an AF session update procedure.

In some embodiments, the first information is used by the first core network element to generate a PCC rule.

In some embodiments, the sending module 110 is configured to: send the first information to the RAN via a third core network element.

In some embodiments, the sending module 110 is configured to: send the first information to the third core network element by sending the PCC rule to the third core network element, in which the first information is sent by the third core network element to the RAN.

In some embodiments, the first information is carried in a first container sent by the third core network element to the RAN.

In some embodiments, the first container is TSCAI.

In some embodiments, the third core network element is an SMF.

In some embodiments, the first core network element is a PCF.

In some embodiments, the two adjacent data bursts are included in a plurality of data bursts of a downlink SDF.

Regarding the apparatus in the above embodiments, specific ways in which respective modules perform an operation have been described in detail in the embodiments related to the method, and will not be repeated here.

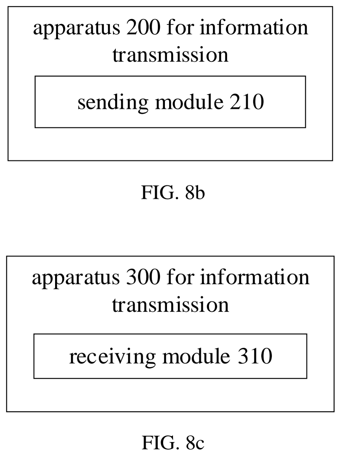

As shown in FIG. 8b, the embodiments of the present disclosure provide an apparatus for information transmission, applied to an AF. The apparatus 200 for information transmission may include: a sending module 210, configured to send first information provided by the AF, in which the first information indicates a gap between an end time of a first data burst and a start time of a second data burst in two adjacent data bursts.

In some embodiments, the sending module 210 is configured to perform at least one of: sending the first information provided by the AF to an RAN via a first core network element; or sending the first information provided by the AF to an RAN via a second core network element.

In some embodiments, the sending module 210 is configured to: send the first information provided by the AF directly to the first core network element; or send the first information provided by the AF to the first core network element via an NEF, in which the first information is sent by the first core network element to the RAN.

In some embodiments, the sending module 210 is configured to: send a GTP-U data packet to the RAN via the second core network element, in which a header of the GTP-U data packet carries the first information.

In some embodiments, the first information is identified and/or obtained by the second core network element from an extension header of a PDU according to a protocol description provided by the first core network element.

In some embodiments, the PDU is sent from an application server of the AF to the second core network element.

In some embodiments, the protocol description provided by the first core network element is determined by the first core network element according to a protocol description provided by the AF and/or a protocol description in local operator policies.

In some embodiments, the protocol description provided by the first core network element is sent by the first core network element to the second core network element via a third core network element, and the protocol description is carried in a PCC rule sent by the first core network element to the third core network element.

In some embodiments, the third core network element is an SMF.

In some embodiments, the first core network element is a PCF.

In some embodiments, the second core network element is a UPF.

In some embodiments, the two adjacent data bursts are included in a plurality of data bursts of a downlink SDF.

Regarding the apparatus in the above embodiments, specific ways in which respective modules perform an operation have been described in detail in the embodiments related to the method, and will not be repeated here.

As shown in FIG. 8c, the embodiments of the present disclosure provide an apparatus for information transmission, applied to an RAN. The apparatus 300 for information transmission may include: a receiving module 310, configured to receive first information provided by an AF, in which the first information indicates a gap between an end time of a first data burst and a start time of a second data burst in two adjacent data bursts.

In some embodiments, the receiving module 310 is configured to: receive the first information provided by the AF and sent by a first core network element.

In some embodiments, the first information is sent directly from the AF to the first core network element, or the first information is sent from the AF to the first core network element via an NEF.

In some embodiments, the first information is sent from the AF to the first core network element during an AF session establishment procedure or an AF session update procedure.

In some embodiments, the first information is used by the first core network element to generate a PCC rule.

In some embodiments, the receiving module 310 is configured to: receive the first information sent by the first core network element via a third core network element.

In some embodiments, the first information is sent by the first core network element to the third core network element via sending the PCC rule to the third core network element.

In some embodiments, the first information is carried in a first container sent by the third core network element to the RAN.

In some embodiments, the first container is TSCAI.

In some embodiments, the receiving module 310 is configured to: receive the first information provided by the AF and sent by a second core network element.

In some embodiments, the receiving module 310 is configured to: receive a GTP-U data packet sent by the second core network element, in which a header of the GTP-U data packet carries the first information.

In some embodiments, the first information is identified and/or obtained by the second core network element from an extension header of a PDU according to a protocol description provided by a first core network element.

In some embodiments, the protocol description provided by the first core network element is determined by the first core network element according to a protocol description provided by the AF and/or a protocol description in local operator policies.

In some embodiments, the protocol description provided by the first core network element is sent by the first core network element to the second core network element via a third core network element, and the protocol description is carried in a PCC rule sent by the first core network element to the third core network element.

In some embodiments, the third core network element is an SMF.

In some embodiments, the first core network element is a PCF.

In some embodiments, the second core network element is a UPF.

In some embodiments, the two adjacent data bursts are included in a plurality of data bursts of a downlink SDF.

Regarding the apparatus in the above embodiments, specific ways in which respective modules perform an operation have been described in detail in the embodiments related to the method, and will not be repeated here.

The embodiments of the present disclosure provide an apparatus for information transmission, applied to a third core network element. The apparatus for information transmission may include: a receiving module, configured to receive first information provided by an AF, in which the first information indicates a gap between an end time of a first data burst and a start time of a second data burst in two adjacent data bursts; and a sending module, configured to send the first information to an RAN.

In some embodiments, the receiving module is configured to: receive a PCC rule sent by the first core network element, in which the first information is carried in the PCC rule, or the first information and the PCC rule are included in the same message.

In some embodiments, the sending module is configured to: send a first container carrying the first information to the RAN.

In some examples, the first container is TSCAI; or the first container may be a new parameter.

In some examples, the two adjacent data bursts are included in a plurality of data bursts of a downlink SDF.

In some embodiments, the third core network element is an SMF.

In some embodiments, the first core network element is a PCF.

Regarding the apparatus in the above embodiments, specific ways in which respective modules perform an operation have been described in detail in the embodiments related to the method, and will not be repeated here.

The embodiments of the present disclosure provide an apparatus for information transmission, applied to a second core network element. The apparatus for information transmission may include: an obtaining module, configured to obtain first information provided by an AF, in which the first information is information provided by the AF; and the first information indicates a gap between an end time of a first data burst and a start time of a second data burst in two adjacent data bursts; and a sending module, configured to send the first information to an RAN.

In some examples, the obtaining module is configured to: identify and/or obtain the first information from an extension header of a PDU according to a protocol description provided by the first core network element.

In some examples, the PDU is sent from an application server of the AF to the second core network element.

In some examples, the protocol description provided by the first core network element is determined by the first core network element according to a protocol description provided by the AF and/or a protocol description in local operator policies.

In some examples, the protocol description provided by the first core network element is sent by the first core network element to the second core network element via a third core network element, and the protocol description is carried in a PCC rule sent by the first core network element to the third core network element.

In some embodiments, the sending module is configured to: send a GTP-U data packet to the RAN, in which a header of the GTP-U data packet carries the first information.

Regarding the apparatus in the above embodiments, specific ways in which respective modules perform an operation have been described in detail in the embodiments related to the method, and will not be repeated here.

The embodiments of the present disclosure provide a communication system, including: an AF, configured to send first information provided by the AF, in which the first information indicates a gap between an end time of a first data burst and a start time of a second data burst in two adjacent data bursts; a first core network element, configured to send the first information to an RAN; and the RAN, configured to receive the first information.

The embodiments of the present disclosure provide a communication device, including: a memory for storing instructions executable by a processor; and the processor, connected to the memory, in which the processor is configured to implement the method for information transmission provided by any one of the above technical solutions.

The processor may include various types of storage media, which are non-transitory computer storage media that may continue to remember information stored thereon after the communication device is powered off.

The communication device includes: various network elements such as an access network element and/or a network function, for example, the network element may be an AF or an RAN, or the network element may be any one of the first core network element to the third core network element.

The processor may be connected to the memory via a bus or the like, and is used to read an executable program stored on the memory, for example, to implement the method for information transmission provided by any one of the above embodiments.

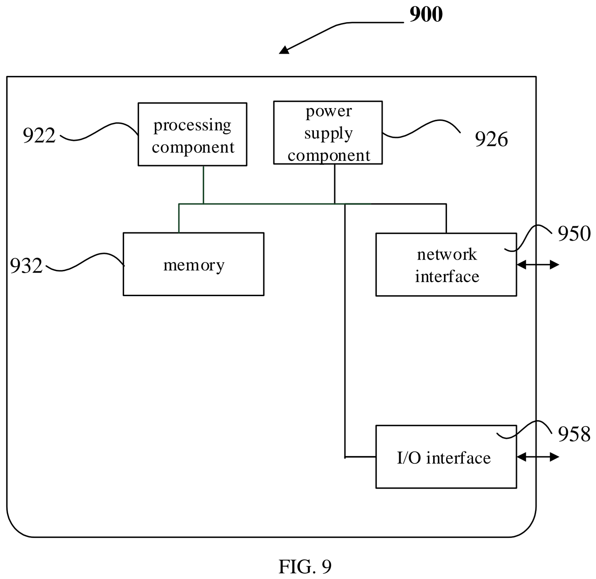

As shown in FIG. 9, the embodiments of the present disclosure show a structure of a communication device. For example, a communication device 900 may be provided as a network side device. The communication device may be various network elements such as the access network element and/or the network function.

Referring to FIG. 9, the communication device 900 includes a processing component 922, which further includes one or more processors, and a memory resource represented by a memory 932, for storing instructions executable by the processing component 922, such as an application. The application stored in the memory 932 may include one or more modules, each of which corresponds to a set of instructions. Furthermore, the processing component 922 is configured to execute instructions to implement the method for information transmission provided by any one of the above embodiments.

The communication device 900 may also include a power component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server ^{™}, Mac OS X^{™}, Unix^{™}, Linux^{™}, FreeBSD^{™} or the like.

In case of no contradiction, each step in any implementation or any embodiment may be implemented as an independent embodiment, and the steps may be arbitrarily combined. For example, a solution obtained by removing some steps from an implementation or embodiment may also be implemented as an independent embodiment. Moreover, an order of steps in an implementation or embodiment may be arbitrarily exchanged. In addition, optional methods or examples in an implementation or embodiment may be arbitrarily combined. Furthermore, various implementations or embodiments may be arbitrarily combined. For example, some or all steps from different implementations or embodiments may be arbitrarily combined, and an implementation or embodiment may be arbitrarily combined with optional methods or examples from other implementations or embodiments.

Other embodiments of the present disclosure will be apparent to those skilled in the art from consideration of the specification and practice of the present disclosure disclosed here. This application is intended to cover any variations, uses, or adaptations of the present disclosure following the general principles of the disclosure and including common knowledge or conventional technical means in the art that are not disclosed herein. It is intended that the specification and examples be considered as exemplary only, with a true scope and spirit of the present disclosure being indicated by the following claims.

It should be understood that the present disclosure is not limited to the precise structure described above and shown in attached drawings, and various modifications and alterations may be made without going beyond the scope of the present disclosure. Therefore, the protection scope of the disclosure shall be subject to claims.

## Claims

1. A method for information transmission, performed by a first core network element, comprising:
sending first information to a radio access network (RAN), wherein the first information is information provided by an application function (AF); and the first information indicates a gap between an end time of a first data burst and a start time of a second data burst in two adjacent data bursts.

2. The method of claim 1, further comprising:
receiving the first information sent directly from the AF to the first core network element; or
receiving the first information sent from the AF to the first core network element via a network exposure function (NEF).

3. The method of claim 2, wherein the first information is sent from the AF to the first core network element during an AF session establishment procedure or an AF session update procedure.

4. The method of claim 2 or 3, wherein the first information is used by the first core network element to generate a policy and charging control (PCC) rule.

5. The method of any one of claims 1 to 4, wherein sending the first information to the RAN comprises:
sending the first information to the RAN via a third core network element.

6. The method of claim 5, wherein sending the first information to the RAN via the third core network element comprises:
sending the first information to the third core network element by sending the PCC rule to the third core network element, wherein the first information is sent by the third core network element to the RAN.

7. The method of claim 6, wherein the first information is carried in a first container sent by the third core network element to the RAN.

8. The method of claim 7, wherein the first container is time sensitive communication assistance information (TSCAI).

9. The method of any one of claims 5 to 8, wherein the third core network element is a session management function (SMF).

10. The method of any one of claims 1 to 9, wherein the first core network element is a policy control function (PCF).

11. The method of any one of claims 1 to 10, wherein the two adjacent data bursts are comprised in a plurality of data bursts of a downlink service data flow (SDF).

12. A method for information transmission, performed by an application function (AF), comprising:
sending first information provided by the AF, wherein the first information indicates a gap between an end time of a first data burst and a start time of a second data burst in two adjacent data bursts.

13. The method of claim 12, wherein sending the first information provided by the AF comprises at least one of:
sending the first information provided by the AF to a radio access network (RAN) via a first core network element; or
sending the first information provided by the AF to an RAN via a second core network element.

14. The method of claim 13, wherein sending the first information provided by the AF to the RAN via the first core network element comprises:
sending the first information provided by the AF directly to the first core network element; or
sending the first information provided by the AF to the first core network element via a network exposure function (NEF), wherein the first information is sent by the first core network element to the RAN.

15. The method of claim 13, wherein sending the first information provided by the AF to the RAN via the second core network element comprises:
sending a GPRS tunnelling protocol for the user plane (GTP-U) data packet to the RAN via the second core network element, wherein a header of the GTP-U data packet carries the first information.

16. The method of claim 15, wherein the first information is identified and/or obtained by the second core network element from an extension header of a packet data unit (PDU) according to a protocol description provided by the first core network element.

17. The method of claim 16, wherein the PDU is sent from an application server of the AF to the second core network element.

18. The method of claim 16 or 17, wherein the protocol description provided by the first core network element is determined by the first core network element according to a protocol description provided by the AF and/or a protocol description in local operator policies.

19. The method of any one of claims 15 to 18, wherein the protocol description provided by the first core network element is sent by the first core network element to the second core network element via a third core network element, and the protocol description is carried in a policy and charging control (PCC) rule sent by the first core network element to the third core network element.

20. The method of claim 19, wherein the third core network element is a session management function (SMF).

21. The method of any one of claims 13 to 20, wherein the first core network element is a policy control function (PCF).

22. The method of any one of claims 13 to 21, wherein the second core network element is a user plane function (UPF).

23. The method of any one of claims 12 to 22, wherein the two adjacent data bursts are comprised in a plurality of data bursts of a downlink service data flow (SDF).

24. A method for information transmission, performed by a radio access network (RAN), comprising:
receiving first information provided by an application function (AF), wherein the first information indicates a gap between an end time of a first data burst and a start time of a second data burst in two adjacent data bursts.

25. The method of claim 24, wherein receiving the first information provided by the AF comprises:
receiving the first information provided by the AF and sent by a first core network element.

26. The method of claim 25, wherein the first information is sent directly from the AF to the first core network element, or the first information is sent from the AF to the first core network element via a network exposure function (NEF).

27. The method of claim 25 or 26, wherein the first information is sent from the AF to the first core network element during an AF session establishment procedure or an AF session update procedure.

28. The method of any one of claims 25 to 27, wherein the first information is used by the first core network element to generate a policy and charging control (PCC) rule.

29. The method of any one of claims 25 to 28, wherein receiving the first information provided by the AF and sent by the first core network element comprises:
receiving the first information sent by the first core network element via a third core network element.

30. The method of claim 29, wherein the first information is sent by the first core network element to the third core network element via sending the PCC rule to the third core network element.

31. The method of claim 29 or 30, wherein the first information is carried in a first container sent by the third core network element to the RAN.

32. The method of claim 31, wherein the first container is time sensitive communication assistance information (TSCAI).

33. The method of claim 24, wherein receiving the first information provided by the AF comprises:
receiving the first information provided by the AF and sent by a second core network element.

34. The method of claim 33, wherein receiving the first information provided by the AF and sent by the second core network element comprises:
receiving a GPRS tunnelling protocol for the user plane (GTP-U) data packet sent by the second core network element, wherein a header of the GTP-U data packet carries the first information.

35. The method of claim 33 or 34, wherein the first information is identified and/or obtained by the second core network element from an extension header of a packet data unit (PDU) according to a protocol description provided by a first core network element.

36. The method of claim 35, wherein the protocol description provided by the first core network element is determined by the first core network element according to a protocol description provided by the AF and/or a protocol description in local operator policies.

37. The method of claim 35 or 36, wherein the protocol description provided by the first core network element is sent by the first core network element to the second core network element via a third core network element, and the protocol description is carried in a policy and charging control (PCC) rule sent by the first core network element to the third core network element.

38. The method of claim 29, 30, 31, 32 or 37, wherein the third core network element is a session management function (SMF).

39. The method of any one of claims 25 to 32 or 34 to 38, wherein the first core network element is a policy control function (PCF).

40. The method of any one of claims 33 to 37, wherein the second core network element is a user plane function (UPF).

41. The method of any one of claims 24 to 40, wherein the two adjacent data bursts are comprised in a plurality of data bursts of a downlink service data flow (SDF).

42. An apparatus for information transmission, applied to a first core network element, comprising:
a sending module, configured to send first information to a radio access network (RAN), wherein the first information is information provided by an application function (AF); and the first information indicates a gap between an end time of a first data burst and a start time of a second data burst in two adjacent data bursts.

43. An apparatus for information transmission, applied to an application function (AF), comprising:
a sending module, configured to send first information provided by the AF, wherein the first information indicates a gap between an end time of a first data burst and a start time of a second data burst in two adjacent data bursts.

44. An apparatus for information transmission, applied to a radio access network (RAN), comprising:
a receiving module, configured to receive first information provided by an application function (AF), wherein the first information indicates a gap between an end time of a first data burst and a start time of a second data burst in two adjacent data bursts.

45. A communication device, comprising:
a processor; and
a memory for storing instructions executable by the processor,
wherein the processor is configured to, when the instructions are executed, implement the method for information transmission of any one of claims 1 to 11, the method for information transmission of any one of claims 12 to 23, or the method for information transmission of any one of claims 24 to 41.

46. A communication system, comprising: a first core network element, an application function (AF), and a radio access network (RAN),
wherein the first core network element is configured to implement the method for information transmission of any one of claims 1 to 11;
the AF is configured to implement the method for information transmission of any one of claims 12 to 23; and
the RAN is configured to implement the method for information transmission of any one of claims 24 to 41.

47. A computer storage medium, for storing a computer executable program that, when executed by a processor, the method for information transmission of any one of claims 1 to 11, the method for information transmission of any one of claims 12 to 23, or the method for information transmission of any one of claims 24 to 41 is implemented.
